# EUROPÄISCHE PATENTSCHRIFT

(11) **EP 0 849 122 B1**
(45) Veröffentlichungstag und Bekanntmachung des Hinweises auf die Patenterteilung: **04.09.2002**
(21) Anmeldenummer: 97121119.8
(22) Anmeldetag: 02.12.1997
(51) Int. Cl.: B60R 16/02

(54) **Verfahren zur Übertragung digitaler Daten**
Process for the transmittal of digital data
Procédé pour la transmission de données digitales

(30) Priorität: 21.12.1996 DE 19653794
(43) Veröffentlichungstag der Anmeldung: 24.06.1998
(73) Patentinhaber: Conti Temic Microelectronic GmbH, 90411 Nürnberg (DE)
(72) Erfinder: Baur, Richard, 85276 Pfaffenhofen (DE); Bischoff, Michael, 85111 Adelschlag (DE); Fendt, Günter, 86529 Schroberhausen (DE); Schäffer, Stefan, 86556 Kühbach (DE); Wagner, Gerhard, 86529 Schrobenhausen (DE)
(74) Vertreter: Maute, Hans-Jürgen, Dipl.-Ing.

(56) Entgegenhaltungen:
- EP-B- 0 471 871
- WO-A-97/40604
- DE-A- 4 401 785
- DE-A- 19 541 637
- DE-A- 19 616 293
- DE-A- 19 643 410

## Beschreibung

Die Erfindung betrifft ein Verfahren zur Übertragung digitaler Daten gemäß Patentanspruch 1, wobei die Daten zwischen einer Zentraleinheit und mehreren Steuermodulen ausgetauscht werden. Insbesondere zur Steuerung komplexer Systeme, deren einzelne Module räumlich voneinander entfernt angeordnet sind, hat sich in den letzten Jahren die Verwendung von Binary-Unit-Systems, sogenannten BUS-Systemen, bewährt. Diese ermöglichen es, über ein Leitungssystem einzelne oder mehrere Module anzusteuern. Dabei sendet die Zentraleinheit Steuerinformationen an die Steuermodule, welche diese auswerten, umsetzen und Kontrollinformationen zurücksenden.

Die Verwendung von Verfahren zur Übertragung digitaler Daten mittels eines BUS-Systems ist im Kfz-Bereich bekannt. Dabei werden auch Steuermodule für Sicherheitseinrichtungen, wie z. B. für Airbags, Gurtstraffer o. ä., über das BUS-System angesteuert. Wird von der Zentraleinheit ein sicherheitskritischer Zustand z.B. aufgrund einer entsprechenden Pegeländerung eines Sensorsignals, erkannt, müssen die Daten möglichst schnell an die Steuermodule übertragen werden, damit die Sicherheitseinrichtungen noch rechtzeitig ausgelöst werden können.

Aus diesem Grunde wird in der DE 195 41 637 A1 ein Multiplex-Kommunikationssystem vorgestellt, bei dem die zu übertragenden Daten unterschiedenen Dringlichkeitsstufen zugeordnet werden und die Datenübertragung entsprechend der Reihenfolge der Dringlichkeit erfolgt.

In der nicht vorveröffentlichten DE 196 09 076 C1 wird für die Datenübertragung in Insassenschutzsystemen vorgeschlagen, bei Erkennen eines sicherheitskritischen Zustands den Datenaustausch zwischen Zentraleinheit und den Modulen der Insassenschutzeinrichtungen ganz einzustellen und das Übertragungsmedium so für einen damit zeitlich frei setzbaren Auslösebefehl freizumachen.

Aus der ebenfalls nicht vorveröffentlichten WO 97/40604 wird ein Bussystem für die Übertragung von Nachrichten unterschiedlicher Dringlichkeit vorgestellt, bei dem für die Nachrichten hoher Dringlichkeit ein völlig anderes Übertragungsprotokoll benutzt wird, als für die Nachrichten geringer Dringlichkeit.

Vorzugsweise wird dabei für Nachrichten hoher Dringlichkeit die Amplitude und auch die Bitdauer, also letztlich die Übertragungsfrequenz erhöht, so dass ein höherer Datendurchsatz möglich ist, andererseits die elektromagnetischen Störungen bei der Übertragung von Nachrichten niedriger Dringlichkeit gering gehalten. Die Rückantwort der Peripheriegeräte erfolgt durch Kurzschluss der Busleitungen mit niedriger Amplitude und Frequenz, so dass Nachrichten hoher Dringlichkeit mit hoher Amplitude und Frequenz vor Beendigung des Absendens von Nachrichten niedriger Dringlichkeit und/oder vor Empfang von Nachrichten von den Peripheriegeräten absendbar sind, die Nachrichten hoher Dringlichkeit diese also überschreiben.

Aufgabe der Erfindung ist es daher, ein alternatives Verfahren zur Übertragung digitaler Daten vorzustellen, welches im Falle des Auftretens eines sicherheitskritischen Zustandes eine schnellstmögliche Übertragung von Daten ermöglicht. Die Aufgabe ist durch die kennzeichnenden Merkmale des Anspruches 1 gelöst.

Wird von der Zentraleinheit z.B. aufgrund einer entsprechenden Pegeländerung eines oder mehrerer Sensorsignale ein sicherheitskritischer Zustand erkannt, kann durch das gegenüber dem normalen Übertragungsprotokoll verkürzte Protokoll die Übertragung um die freiwerdenden Takteinheiten schneller ablaufen und schneller neue Steuerinformationen an die gleichen oder anderen Steuermodule senden. Die Verkürzung des Übertragungsprotokolls muß dabei so gewählt sein, daß die Auswertung weiter sichergestellt ist.

Die Verkürzung wird dadurch erreicht, daß der im normalen Übertragungsprotokoll vorgesehene Dialogbetrieb, also die Übertragung der Steuerinformation von der Zentraleinheit zu den Steuermodulen und die Rücksendung der Kontrollinformation von den Steuermodulen zur Zentraleinheit, aufgehoben und ein Übertragungsprotokoll für einen Monologbetrieb aktiviert wird, also auf die Rücksendung der Kontrollinformation verzichtet wird.

Wie als weitere vorteilhafte Weiterbildung beschrieben, können die freiwerdenden Takteinheiten der bisherigen Kontrollinformation dazu verwandt werden, daß die Zentraleinheit bereits den nächsten Zyklus an Steuerinformationen sendet, beispielsweise eine Auslöseinformation für weitere Sicherheitseinrichtungen. Entsprechend werden die Steuermodule nach dem Empfang der Steuerinformation mit sicherheitskritischem Inhalt permanent auf Empfang geschaltet.

Die Anwendung dieser Verfahren erweist sich im Bereich der Steuerung von Kfz-Sicherheitseinrichtungen als besonders vorteilhaft, da insbesondere hier im Falle eines Unfalls sehr schnell die unterschiedlichen Sicherheitseinrichtungen, wie Airbag oder Gurtstraffer, angesteuert werden müssen, insbesondere wenn Steuermodule einzeln mit unterschiedlichen Steuerinformationen angesteuert werden.

Die Erfindung wird nachfolgend anhand eines Ausführungsbeispieles unter Verwendung einer Abbildung näher erläutert, die mehrere Übertragungszyklen, bei denen erfindungsgemäß nach dem Eintreten eines sicherheitskritischen

Zustands das Übertragungsprotokoll vom einem ersten Übertragungsprotokoll (Dialogbetrieb) auf das verkürzte, zweite Übertragungsprotokoll (Monologbetrieb) wechselt, zeigt.

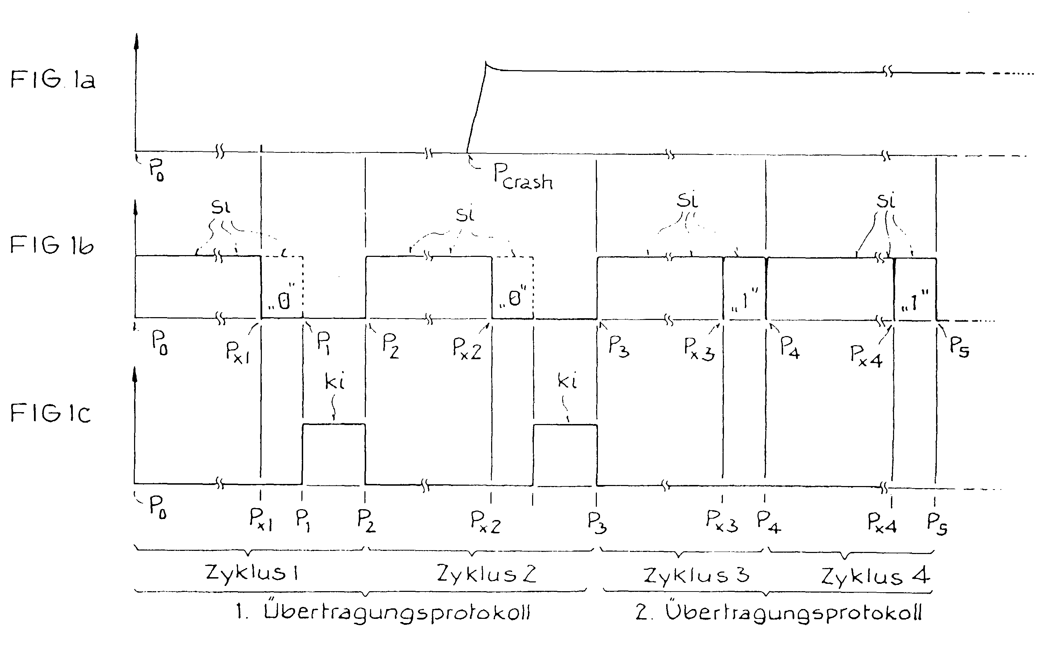

Der Startpunkt P₀ in Fig. 1 wurde so gewählt, daß gerade ein neuer Zyklus (Zyklus 1) mit dem Senden der Steuerinformation (si) beginnt. Die erste abgebildete Funktion (Fig. 1a) zeigt den Signalverlauf des Sensorsignals in der Zentraleinheit. Der Sensor erkennt im Zeitpunkt P_{crash} einen sicherheitskritischen Zustand und zeigt diesen an (vgl. Fig. 1a). In der zweiten Funktion (Fig. 1b) ist das Senden von Steuerinformationen (si) von der Zentraleinheit zu den Steuermodulen abgebildet; die dritte Funktion (Fig. 1c) zeigt das Senden von Kontrollinformationen (ki) von einem Steuermodul zur Zentraleinheit. Zum Zeitpunkt Pₓᵢ eines jeden Zyklus wird dabei das sicherheitsrelevante Element der Steuerinformation (si) übertragen.

Die Zyklen 1 und 2 zeigen den normalen Dialogbetrieb zwischen Zentraleinheit und Steuermodulen gemäß dem ersten Übertragungsprotokoll. Der Sensor weist keinen Pegel auf (Fig. 1a); daher setzt die Zentraleinheit den Wert für Pₓ₁ und Pₓ₂ auf "0" (Fig. 1b). Vom Zeitpunkt P₀ an sendet die Zentraleinheit Steuerinformationen (si, Fig. 1b). Zwischen P₁ und P₂ antwortet das angesprochene Steuermodul mit Kontrollinformationen (ki, Fig. 1c). Dies wiederholt sich im Zyklus 2.

Zum Zeitpunkt P_{crash} wird von den Sensoren ein sicherheitskritischer Zustand an die Zentraleinheit gemeldet (Fig. 1a). Im darauffolgenden Zyklus (Zyklus 3 in diesem Beispiel) erfolgt der erfindungsgemäße Wechsel auf das zweite, verkürzte Übertragungsprotokoll. Dazu sendet zum Zeitpunkt Pₓ₃ die Zentraleinheit in der Steuerinformation (si) nun das sicherheitskritische Signal, hier als Wert "1" dargestellt (vgl. Fig. 1b). Die Steuermodule empfangen das sicherheitskritische Signal "1" und senden daher keine Kontrollinformation zurück (Fig. 1c). Die Zentraleinheit startet zum Zeitpunkt P₄ den 4. Zyklus z.B. zur Ansteuerung eines anderen Steuermoduls, ohne auf Kontrollinformationen von den Steuermodulen zu warten (Fig. 1b).

Das schematisch beschriebene Ausführungsbeispiel soll so zur Ansteuerung von Airbag-Gasgeneratoren über ein BUS-System in Kraftfahrzeugen eingesetzt werden und die individuelle Ansteuerung von Steuermodulen auch in zeitkritischen Situationen gewährleisten. Insbesondere wenn in einem Kfz-Sicherheitssystem mehrere, von einander unabhängig ansteuerbare Steuermodule vorgesehen sind, würden ohne diese Verkürzung des Übertragungsprotokolls nicht mehr alle Sicherheitseinrichtungen innerhalb der geforderten, kurzen Zeit angesteuet werden können.

## Patentansprüche

1. Verfahren zur Übertragung digitaler Daten zwischen einer Zentraleinheit und mehreren mit dieser mittels eines BUS-Systems kommunikationsfähig verbundenen Steuermodulen zur Übertragung von Steuerinformationen, welche beim Auftreten eines sicherheitskritischen Zustandes entsprechende, den sicherheitskritischen Zustand anzeigende Steuerinformationen beinhalten, insbesondere zur Ansteuerung von Sicherheitseinrichtungen in Kraftfahrzeugen, bei dem ein erstes Übertragungsprotokoll verwendet wird, in welchem die Zentraleinheit Steuerinformationen (si) aussendet und die Steuermodule darauf mit Kontrollinformationen (ki) antworten,
a) wobei im Falle des Auftretens eines sicherheitskritischen Zustandes (Pcrash) ein zweites Übertragungsprotokoll aktiviert wird, welches zeitlich kürzer als das erste Übertragungsprotokoll ist, indem
b) im zweiten Übertragungsprotokoll von der Zentraleinheit eine den sicherheitskritischen Zustand anzeigende Steuerinformation (Px3="1") gesendet wird und
c) von den Steuermodulen nach dem Empfang der Steuerinformation mit sicherheitskritischem Inhalt keine Kontrollinformationen (ki) mehr zurück an die Zentraleinheit gesandt werden.

2. Verfahren nach Anspruch 1, **dadurch gekennzeichnet, daß**
a) die Zentraleinheit nach dem Versenden der Steuerinformation (si) mit sicherheitskritischem Inhalt (Pxi="1") die Rücksendung von Kontrollinformationen (ki) nicht abwartet, sondern sofort die nächsten Steuerinformationen sendet und
b) die Steuermodule nach dem Empfang der Steuerinformation mit sicherheitskritischem Inhalt sofort wieder auf den Empfang der nächsten Steuerinformation gesetzt werden und bis zum Abfall der sicherheitskritischen Steuerinformation oder permanent im Empfangsmodus verbleiben.

3. Verwendung der Verfahren nach einem der voranstehenden Ansprüche zur Ansteuerung von Steuermodulen für Kfz-Sicherheitseinrichtungen, insbesondere Airbag-Steuermodulen, über ein BUS-System in Kraftfahrzeugen.

## Claims

1. A method of transmitting digital data between a central unit and a plurality of communication-enabled control modules that are connected thereto by means of a BUS-system for the purposes of transmitting control information, which, upon the occurrence of a safety-critical state, contains corresponding control information indicative of the safety-critical state, especially for controlling safety devices in motor vehicles, wherein a first transmission protocol is used in which the central unit transmits control information (si) and the control modules reply thereto with check information (ki),
a) wherein, in the event of the occurrence of a safety-critical state (P_{crash}), a second transmission protocol is activated which is shorter in time than the first transmission protocol, in that
b) an item of control information (Px3= "1") indicative of the safety-critical state is transmitted by the central unit in the second transmission protocol and
c) check information (ki) is no longer sent back to the central unit by the control modules following the reception of the control information having a safety-critical content.

2. A method in accordance with Claim 1, **characterised in that**
a) following the transmission of control information (si) having a safety critical content (Pxi = "1"), the central unit does not wait for the return of check information (ki), but immediately transmits the next items of control information and
b) following the reception of control information having a safety-critical content, the control modules are immediately set for reception of the next item of control information and remain in the reception mode until the cessation of the safety-critical control information or permanently.

3. The use of the method in accordance with any of the preceding Claims for controlling control modules for motor vehicle safety devices, especially airbag control modules, via a BUS-system in motor vehicles.

## Revendications

1. Procédé pour transmettre des données numériques entre une unité centrale et plusieurs modules de commande qui sont reliés de manière à établir une communication par l'intermédiaire d'un système BUS, pour la transmission d'informations de commande, qui contiennent, lors de l'apparition d'un état critique du point de vue sécurité, des informations de commande correspondantes, indiquant l'état critique du point de vue sécurité, notamment pour la commande de dispositifs de sécurité dans des véhicules automobiles, selon lequel on utilise un premier protocole de transmission, dans lequel l'unité centrale émet des informations de commande (si) et les modules de commande répondent alors par des informations de contrôle (ki), selon lequel
a) dans le cas d'un état critique du point de vue de la sécurité (Pcrash) un second protocole de transmission, qui est plus court dans le temps que le premier protocole de transmission, est activé, par le fait que
b) dans le second protocole de transmission, l'unité centrale envoie une information de commande (Px3 = "1") affichant l'état critique du point de vue sécurité, et
c) aucune information de contrôle (ki) n'est plus renvoyée à l'unité centrale après la réception de l'information de commande comportant le contenu critique du point de vue sécurité.

2. Procédé selon la revendication 1, **caractérisé en ce que**
a) un point d'émission de l'information de commande (si) avec le contenu critique du point de vue sécurité (Pxi = "1"), l'unité centrale n'attend pas le renvoi d'informations de contrôle (ki), mais émet immédiatement les informations de commande suivantes, et
b) après la réception de l'information de commande avec le contenu critique du point de vue sécurité, les modules de commande sont positionnés à nouveau immédiatement sur la réception de l'information de commande suivante et restent dans le mode de réception jusqu'à la suppression de l'information de commande critique du point de vue sécurité, ou de façon permanente.

3. Utilisation du procédé selon l'une des revendications précédentes, pour la commande de modules de commande pour des dispositifs de sécurité pour véhicule automobile, notamment des modules de commande d'airbag, par l'intermédiaire d'un système BUS dans des véhicules automobiles.
